# EUROPEAN PATENT APPLICATION

(11) **EP 4 753 004 A1**
(43) Date of publication of application: **03.06.2026**
(21) Application number: 25749125.8
(22) Date of filing: 22.01.2025
(51) Int. Cl.: H01M 10/0562, H01M 10/42, H01M 10/0585, H01M 10/052

(54) **SOLID ELECTROLYTE FOR ALL-SOLID-STATE BATTERY AND ALL-SOLID-STATE BATTERY INCLUDING SAME**

(30) Priority: 31.01.2024 US 202418428312
(71) Applicant: LG Energy Solution, Ltd., Seoul 07335 (KR); The Regents of the University of California, Oakland, CA 94607-5200 (US)
(72) Inventor: OH, Jeongwoo, Daejeon 34122 (KR); SONG, Min Sang, Daejeon 34122 (KR); HONG, Junghwa, Newark, California 94560 (US); LIU, Ping, San Diego, California 92130 (US); LIU, Mengchen, San Diego, California 92122 (US)
(74) Representative: Goddar, Heinz J.
(86) International application number: PCT/KR2025/001191
(87) International publication number: WO 2025/165038

(57) **Abstract**

Disclosed is a solid electrolyte for a solid-state battery, preferably an all-solid-state battery, which may be protected from moisture by chemically reacting a material such as an amphiphilic compound, e.g., a surfactant with a sulfide-containing solid electrolyte, as well as a -solid-state battery comprising the solid electrolyte. The solid electrolyte for the all-solid-state battery is surface-modified with an amphiphilic compound having a hydrophilic group and a hydrophobic group.

## Description

### [Technical Field]

This application claims the benefit of priority to U.S. Patent Application No. 18/428,312 filed on January 31, 2024, all contents of which are incorporated as a part of the present specification.

The present disclosure relates to a sulfide-containing solid electrolyte that has advantages in terms of ionic conductivity and thermal stability compared to liquid electrolytes or polymer-based/oxide-containing solid electrolytes, and more specifically, to a solid electrolyte for an all-solid-state battery that can be protected from moisture by chemically reacting a material in the concept of a surfactant with a sulfide-containing solid electrolyte and thus introducing it, and an all-solid-state battery comprising the same.

### [Background Art]

There continues to be an increase in electrified transportation, exemplified by the widespread adoption of electric vehicles (EVs) and the emergence of urban air mobility (UAM) vehicles. Simultaneously, there is a growing demand for stationary energy storage systems, notably in the residential and industrial sectors, powered by solar and wind generators. This shift is driven in part by the pressing need to mitigate the adverse environmental and climate impacts associated with traditional internal combustion engines and other non-renewable means of power generation. Thus, the development of battery technologies with high energy density, while also ensuring enhanced safety, has become an imperative.

From the viewpoint of limitations with respect to capacity, safety, output, large size, miniaturization, etc., of batteries, various batteries that may overcome the limitations of lithium secondary batteries are currently being studied.

On-going studies are being concentrated on different types of batteries. These include metal-air batteries that have large theoretical capacities and all-solid-state batteries that do not have explosion hazards in terms of safety. Also, supercapacitors in terms of output, NaS batteries or redox flow batteries (RFB) in terms of large size, and thin film batteries in terms of miniaturization.

Among them, the all-solid-state battery refers to a battery in which the liquid electrolyte used in an existing lithium secondary battery is replaced with a solid. Such all-solid-state batteries are safer since they do not use a flammable solvent, so there is no ignition or explosion likelihood due to the decomposition reaction of a conventional electrolyte. This all-solid-state battery especially has the advantage of improving the problems of low stability, energy density and long lifetime of the liquid electrolyte contained in a lithium-ion battery (LIB) and the like. In addition, since the all-solid-state battery can use Li metal or Li alloy as a material for anodes, it may have the advantage of dramatically improving the energy density of the battery.

Meanwhile, the solid electrolyte of this all-solid-state battery may be largely classified into organic (polymer-containing) solid electrolytes and inorganic solid electrolytes. Among them, inorganic solid electrolytes may be divided into sulfide-containing and oxide-containing solid electrolytes. In addition, the solid electrolyte for which technological development has been focused is a sulfide-containing solid electrolyte, the development of which strives to achieve ionic conductivity which reaches a level close to that of an organic electrolyte solution. As such, since the sulfide-containing solid electrolyte not only has a high ionic conductivity of 10⁻³ S/cm to 10⁻² S/cm among solid electrolytes, but also has excellent thermal stability and ductility, it may have the advantage (Interfacial compatibility) of improving resistance by making good contact with the interface.

Nonetheless, since sulfide-containing solid electrolytes are sensitive to moisture, such as generating toxic gases belonging to, for instance, the H₂S (Hydrogen Sulfide) series upon contact with moisture, when manufacturing a battery or electrode, it is necessary to build a very dry environment. The present disclosure aims to provide a specific and practical solution to these problems.

### [Disclosure]

### [Technical Problem]

Accordingly, it is an object of the present disclosure to provide a solid electrolyte for an all-solid-state battery that may be protected from moisture by chemically reacting a material in the concept of a surfactant with a sulfide-containing solid electrolyte and thus introducing it, and an all-solid-state battery comprising the same.

### [Technical Solution]

In order to achieve the above object, the present disclosure provides a solid electrolyte for an all-solid-state battery, which is surface-modified with an amphiphilic compound having a hydrophilic group and a hydrophobic group.

In addition, the present disclosure provides an all-solid-state battery comprising a cathode; an anode; and the solid electrolyte for the all-solid-state battery as described herein.

### [Advantageous Effects]

The solid electrolyte for an all-solid-state battery and the all-solid-state battery comprising the same according to the present disclosure has the advantage of protecting the sulfide-containing solid electrolyte from moisture by chemically reacting a material in the concept of a surfactant with a sulfide-containing solid electrolyte and introducing it accordingly.

### [Description of Drawings]

FIG. 1 is an image showing the structure of an amphiphilic compound contained in a solid electrolyte for an all-solid-state battery according to an aspect of the present disclosure, wherein (a) of FIG. 1 is an image showing that the amphiphilic compound is divided into a hydrophilic site and a hydrophobic site and (b) of FIG. 1 is an image of one illustrative amphiphilic compound..
FIG. 2 is an XRD graph showing the difference in structural stability between the solid electrolyte according to the present disclosure and a conventional solid electrolyte depending on the exposure to moisture.
FIG. 3 is an XRD graph showing the difference in structural stability of a conventional solid electrolyte depending on the exposure to moisture (exposure to air).
FIG. 4 is a graph showing the difference in ionic conductivity of the solid electrolyte according to the present disclosure and a conventional solid electrolyte depending on exposure to moisture (exposure to air).
FIG. 5 is a graph showing the difference in ionic conductivity of the solid electrolyte according to the present disclosure and a conventional solid electrolyte depending on exposure to moisture (exposure to air).
FIG. 6 is a graph showing the difference in ionic conductivity of a conventional solid electrolyte depending on exposure to moisture (exposure to air).

### [Best Mode]

Hereinafter, the present disclosure will be described in detail.

The solid electrolyte for an all-solid-state battery according to the present disclosure is characterized in that it is surface-modified with an amphiphilic compound with hydrophilic and hydrophobic groups, and specifically is surface-modified with an amphiphilic compound in which a hydrophilic group is located on one side and a hydrophobic group is located on the other side, wherein the hydrophilic group is bonded.

One aspect of the present disclosure relates to a solid electrolyte for an all-solid-state battery including a solid electrolyte, and a modified layer on a surface of the solid electrolyte, the modified layer including an amphiphilic compound, wherein the amphiphilic compound includes at least one hydrophilic group and at least one hydrophobic group.

In another aspect of the present disclosure, wherein the solid electrolyte includes a sulfide-containing solid electrolyte. In yet another aspect the solid electrolyte includes a bond between the hydrophilic group of the amphiphilic compound and the surface of the sulfide-containing solid electrolyte.

In yet another aspect of the present disclosure, the hydrophilic group of the amphiphilic compound is at least one selected from the group consisting of a thiol group, an amine group, an isocyanate group, and an ethoxysilyl group.

In another aspect of the present disclosure, the hydrophobic group of the amphiphilic compound is a hydrocarbon group substituted with fluorine or an organosilicon compound.

In yet another aspect of the present disclosure, the amphiphilic compound is a perfluorothiol-containing compound. In another aspect, the perfluorothiol-containing compound is a C1 to C30 aliphatic or aromatic hydrocarbon substituted with 1 to 20 fluorines and 1 to 5 thiol groups.

In an aspect of the present disclosure, the perfluorothiol-containing compound is a C8-C12 hydrocarbon substituted with 15-20 fluorines and 1-3 thiol groups.

In another aspect, the perfluorothiol-containing compound is a C10 hydrocarbon substituted with 17 fluorines and 1 thiol group. For instance, the perfluorothiol-containing compound is CF₃(CF₂)₇(CH₂)₂SH. This structure is also known under CAS No: 34143-74-3 (1H,1H,2H,2H-perfluorodecanethiol).

In an aspect of the present disclosure, the sulfide-containing solid electrolyte includes Li₆PS₅Cl.

In another aspect of the present disclosure, a content of the amphiphilic compound is 5 to 30% by weight based on 100% by weight of the solid electrolyte for the all-solid-state battery.

In yet another aspect of the present disclosure, a thickness of the modified layer comprising the amphiphilic compound is 0.1 *µ*m to 3 *µ*m. In other aspects, the thickness is 0.1 *µ*m to 1 *µ*m, or 0.3 *µ*m to 0.5 *µ*m.

In another aspect, the hydrophilic group of the perfluorothiol-containing compound is bonded with the solid electrolyte, and the hydrophobic group of perfluorothiol-containing compound is located at an outermost part of the solid electrolyte.

In an aspect of the present disclosure, the disclosure relates to an all-solid-state battery including a cathode, an anode, and the solid electrolyte as disclosed herein.

In an aspect of the present disclosure, the solid electrolyte is positioned as a film having a layered structure between the cathode and the anode. Alternatively, or in addition, the solid electrolyte is mixed and contained in one or both of a cathode active material and an anode active material.

In another aspect of the present disclosure, the all-solid-state battery may be a semi-solid battery that further comprises a liquid electrolyte.

### Solid Electrolyte

The solid electrolyte for an all-solid-state battery according to the present disclosure may contain a sulfide-containing solid electrolyte as a parent material. In addition, the solid electrolyte for the all-solid-state battery of the present disclosure is characterized in that the surface of the parent material is surface-modified with an amphiphilic compound having a hydrophilic group on one side and a hydrophobic group on the other side, and the hydrophilic group of the amphiphilic compound is bonded to the surface of the parent material. That is, the solid electrolyte for the all-solid-state battery is characterized in that it may comprise a sulfide-containing solid electrolyte as a parent material, and the surface of the parent material is modified with the amphiphilic compound.

The parent material, for instance, the sulfide-containing solid electrolyte may contain a lithium salt, and the lithium salt may be represented by Li⁺X⁻ as an ionizable lithium salt. The anion of the lithium salt is not particularly limited, but F⁻, Cl⁻, Br⁻, I⁻, NO₃⁻, N(CN)₂⁻, BF₄⁻, ClO₄⁻, PF₆⁻, (CF₃)₂PF₄⁻, (CF₃)₃PF₃⁻, (CF₃)₄PF₂⁻, (CF₃)₅PF⁻, (CF₃)₆P⁻, CF₃SO₃⁻, CF₃CF₂SO₃⁻, (CF₃SO₂)₂N⁻, (FSO₂)₂N⁻, CF₃CF₂(CF₃)₂CO⁻, (CF₃SO₂)₂CH⁻, (SF₅)₃C⁻, (CF₃SO₂)₃C⁻, CF₃(CF₂)₇SO₃⁻, CF₃CO₂⁻, CH₃CO₂⁻, SCN⁻ and (CF₃CF₂SO₂)₂N⁻ and the like may be exemplified. For purposes of the present disclosure, any suitable sulfide-containing electrolyte material may be used. As used here, "sulfide-containing electrolyte" refers to an electrolyte that includes inorganic materials containing S which conduct ions (*e.g.,* Li⁺), and which are suitable for electrically insulating the positive and negative electrodes of an electrochemical cell. Exemplary sulfide-containing electrolytes are set forth in Shaojie Chen et al., "Sulfide solid electrolytes for all-solid-state lithium batteries: Structure, conductivity, stability and application," Energy Storage Materials, Volume 14, Pages 58-74 (September 2018), which is hereby expressly incorporated by reference in its entirety.

For example, many sulfide-containing electrolyte materials are particularly attractive due to their superionic conductivities (as high as ~10-2 S cm-1) and deformability. In particular, Li₃P₇S₁₁, Li₁₀GeP₂S₁₂, and Na₃PS₄ and Li₆PS₅Cl have been reported to exhibit high ionic conductivities; some even close to those of liquid electrolytes. According to aspects of the disclosure, the sulfide solid electrolyte materials also provide a low Young's modulus, which is beneficial for producing favorable interface contacts with electrode materials by simple cold pressing at room temperature.

The sulfide-containing solid electrolyte contains sulfur (S) and has the ionic conductivity of a metal belonging to Group 1 or Group 2 of the Periodic Table, and may comprise Li-P-S-based glass, Li-P-S-based glass ceramic and argyrodite-based sulfide-containing solid electrolyte. Nonlimiting examples of such sulfide-containing solid electrolytes include one or more of Li₂S-P₂S₅, Li₂S-Lil-P₂S₅, Li₂S-LiI-Li₂O-P₂S₅, Li₂S-LiBr-P₂S₅, Li₂S-LiCl-P₂S₅, Li₂S-Li₂O-P₂S₅, Li₂S-Li₃PO₄-P₂S₅, L1₂S-P₂S₅-P₂O₅, Li₂S-P₂S₅-SiS₂, Li₂S-P₂S₅-SnS, Li₂S-P₂S₅-Al₂S₃, Li₂S-GeS₂, Li₂S-GeS₂-ZnS, or Li₆PS₅X (X = at least one of Cl, Br or I) and the like. In addition, the sulfide-containing solid electrolyte comprised as a parent material in the solid electrolyte for the all-solid-state battery of the present disclosure is not limited thereto, and may be comprised of any known sulfide-containing solid electrolyte.

The parent material constituting the solid electrolyte for the all-solid-state battery of the present disclosure, that is, the sulfide-containing solid electrolyte, preferably contains an LPSCl (lithium phosphate sulfur chloride)-based compound, and more preferably contains Li₆PS₅Cl, which may be preferable in terms of playing a role as a transfer layer of ion movement by redox reaction, among them. Further, the parent material constituting the solid electrolyte for the all-solid-state battery of the present disclosure, that is, the sulfide-containing solid electrolyte, may be more preferably composed of Li₆PS₅Cl.

The amphiphilic compound located on the surface of the parent material has a hydrophilic group on one side and a hydrophobic group on the other side, and the hydrophilic group of the amphiphilic compound binds to the surface of the parent material (for example, S-S bond is formed due to strong bonding E between S of Li₆PS₅Cl and S of the thiol group of the amphiphilic compound). That is, in other words, the hydrophilic group of the amphiphilic compound plays a role as a linker that mediates the parent material and the hydrophobic group of the amphiphilic compound. Thus, the hydrophobic group of the amphiphilic compound does not come into contact with the parent material. In addition, the solid electrolyte comprises a bond between the hydrophilic group of an amphiphilic compound and the surface of a sulfide-containing solid electrolyte.

In the amphiphilic compound, the hydrophilic group may be selected from the group consisting of a thiol group, an amine group, an isocyanate group, and suitable leaving group such as an ethoxysilyl group (e.g., such as a triethoxysilyl or a trimethoxysilyl), but is not limited thereto. However, the thiol group that may form the S-S bond with the sulfide-containing solid electrolyte (parent material) is most preferable as a hydrophilic group of the amphiphilic compound. Therefore, other hydrophilic groups containing a sulfur atom may also be applied as a hydrophilic group of an amphiphilic compound, but even in this case, a thiol group is most preferred.

The term "thiol" may be understood as an organosulfur compound of the form R-SH, where R represents an alkyl or other organic substituent. The term "isocyanate" may be understood as a functional group with the formula R-N=C=O, where R may be an alkyl or aryl group.

The term "amine" may be understood as a compound or a functional group that contain a basic nitrogen atom with a lone pair. Amines are formally derivatives of ammonia (NH3), wherein one or more hydrogen atoms have been replaced by a substituent such as an alkyl or aryl group (e.g., alkylamines and arylamines). The substituent -NH₂ is called an amino group. In certain aspects, the amine may include primary amines, secondary amines, and/or tertiary amines. In certain aspects, amino groups can be further converted into a useful leaving group, e.g., by conversion to an ammonium salt, aryl(sulfonyl)amino groups, *etc.*

In addition, the hydrophobic group in the amphiphilic compound is a hydrocarbon group substituted with fluorine or an organosilicon compound (e.g., silane, alkoxy silane, isocyanate). Here, the hydrophilic group is positioned in a substituted state at a carbon atom included in the hydrophobic group. According to aspects of the disclosure, the total number of carbons (including the chain and substituents) will be from 6 to 16 carbons, or according to some aspects of the disclosure, from 6 to 12 carbons, from 8 to 12 carbons, or from 10 to 12 carbons. The hydrocarbon group may have a total of 6 carbons, 7 carbons, 8 carbons, 9 carbons, 10 carbons, 11 carbons, 12 carbons, 13 carbons, 14 carbons, 15 carbons, 16 carbons, 17 carbons, 18 carbons, 19 carbons, or 20 carbons.

For instance, the hydrocarbon group may be a substituted or unsubstituted C3-C20 alkyl group, including, but not limited to a substituted or unsubstituted n-propyl, isopropyl, n-butyl, isobutyl, sec-butyl, tert-butyl, n-pentyl, tert-pentyl, isopentyl, n-hexyl, isohexyl, sec-hexyl, tert-hexyl, n-heptyl, isoheptyl, sec-heptyl, tert-heptyl, n-octyl, isooctyl, sec-octyl, tert-octyl, n-nonyl, isononyl, sec-nonyl, tert-nonyl, n-decyl, isodecyl, sec-decyl, tert-decyl, n-undecyl, isoundecyl, sec-undecyl, tert-undecyl, n-dodecyl, isododecyl, sec-dodecyl, tert-dodecyl, etc.

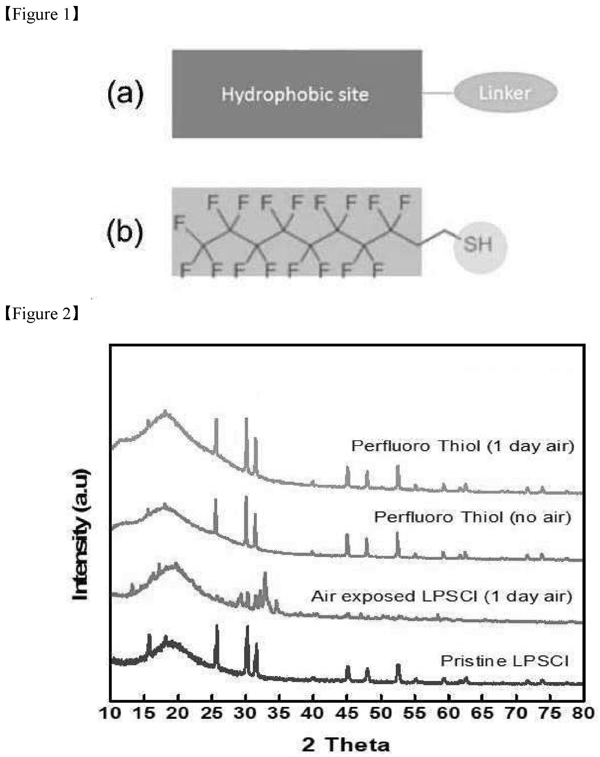

The hydrophilic and hydrophobic groups are separately located in one compound, thereby forming a hydrophilic site and a hydrophobic site, respectively. FIG. 1 is an image showing the structure of an amphiphilic compound contained in a solid electrolyte for an all-solid-state battery according to an aspect of the present disclosure, wherein (a) of FIG. 1 is an image showing that the amphiphilic compound is divided into a hydrophilic site and a hydrophobic site and (b) of FIG. 1 is a more concrete image thereof.

As an example of the bonding relationship between the above parent material and amphiphilic compound, in one aspect, a hydrophilic thiol group and a hydrophobic fluorine-substituted hydrocarbon group may be sequentially connected from the surface of the parent material (e.g., LPSCl-based compound) to its outer direction. However, as described above, it is not limited thereto. In addition, the amphiphilic compound shown in (b) of FIG. 1 is a perfluorothiol-containing compound, and various perfluorothiol-containing compounds may be exemplified as the amphiphilic compound of the present disclosure.

More specifically, in an aspect of the present disclosure, the perfluorothiol-containing compound may be a C1 to C30, preferably C3 to C20, and more preferably C7 to C15 aliphatic or aromatic hydrocarbon substituted with 1 to 20, preferably 5 to 20, more preferably 8 to 18 fluorines and 1 to 5, preferably 1 to 3 thiol groups. In aspects of the present disclosure, there may be any fluorine substitutions in the range of 1, 2, 3, 4, 5, 6, 7, 8, 9, 10, 11, 12, 13, 14, 15, 16, 17, 18, 19 and 20. In aspects of the present disclosure, there may be any thiol groups in the range of 1, 2, 3, 4 and 5.

The content of the amphiphilic compound located on the surface of the parent material may be 5 to 30% by weight, preferably 10 to 20% by weight, more preferably 13 to 18% by weight, based on 100% by weight of the solid electrolyte for the all-solid-state battery of the present disclosure. In aspects of the present disclosure, the content of the amphiphilic compound located on the surface of the parent material may be a % by weight in any range taken from the data points of 5, 6, 7, 8, 9, 10, 11, 12, 13, 14, 15, 16, 17, 18, 19, 20, 21, 22, 23, 24, 25, 26, 27, 28, 29 and 30, based upon 100% by weight of the solid electrolyte for the all-solid-state battery of the present disclosure. If the content of the amphiphilic compound is less than 5% by weight based on 100% by weight of the solid electrolyte for an all-solid-state battery of the present disclosure, it may be difficult to protect the sulfide-containing solid electrolyte from moisture. In addition, if the content of the amphiphilic compound exceeds 30% by weight based on 100% by weight of the solid electrolyte for an all-solid-state battery of the present disclosure, there may be a problem that the ionic conductivity of sulfide-containing solid electrolytes is greatly reduced.

In addition, the thickness of the amphiphilic compound layer (or the modified layer containing the amphiphilic compound) located on the surface of the parent material may be 0.1 *µ*m to 3 *µ*m, preferably 0.1 *µ*m to 1 *µ*m, and more preferably 0.3 *µ*m to 0.5 *µ*m. In aspects of the present disclosure, the thickness of the amphiphilic compound layer may be a thickness in *µ*m in any range taken from the data points of 0.1, 0.2, 0.3, 0.4, 0.5, 0.6, 0.7, 0.8, 0.9, 1.0, 1.1, 1.2, 1.3, 1.4, 1.5, 1.6, 1.7, 1.8, 1.9, 2.0, 2.1, 2.2, 2.3, 2.4, 2.5, 2.6, 2.7, 2.8, 2.9 and 3.0. If the thickness of the amphiphilic compound layer is less than 0.1 *µ*m, the protective effect against moisture may be deteriorated because it does not normally function as a moisture protective layer. In addition, if the thickness of the amphiphilic compound layer exceeds 3 *µ*m, the ionic conductivity of the sulfide-containing solid electrolyte may be greatly reduced because the amphiphilic compound layer rather interferes with lithium ion transfer.

Since the solid electrolyte for an all-solid-state battery described above has a hydrophobic outer surface, the parent material (sulfide-containing solid electrolyte) may be protected from moisture. That is, the present disclosure may be meaningful in that by introducing a material in the concept of a surfactant to the surface of the parent material, it not only protects from moisture, but also maximizes the effect of protection against moisture by increasing the hydrophobicity.

### All-Solid-State Battery

Next, an all-solid-state battery (comprising a solid electrolyte for all-solid-state battery) according to the present disclosure will be described. The all-solid-state battery comprises a cathode, an anode, and the solid electrolyte for the all-solid-state battery described herein.

The solid electrolyte may be provided within a range that does not adversely affect the performance of the battery, such as being positioned independently without being mixed with the electrode (i.e., positioned as a film having a layered structure between the cathode and the anode), being mixed and positioned with any one or more of a cathode active material and an anode active material, or being positioned in both of them.

This solid electrolyte may play the same role as a separator in a general lithium secondary battery (that is, it electrically insulates the cathode and the anode and plays a role of passing lithium ions at the same time). On the other hand, the all-solid-state battery may be used as a semi-solid battery also comprising a liquid electrolyte as needed, and in this case, a separate polymer separator may be further required. A conventional liquid electrolyte may be selected.

The cathode comprises a cathode active material layer comprising an active material, a conductive material, and a binder in the form of granules or the like. Additionally, the cathode comprises a current collector if necessary, and the cathode active material layer may be positioned on at least one surface of the current collector.

As the cathode active material, any material that may be used as a cathode active material for a conventional lithium-ion secondary battery may be used without limitation. In addition, the cathode active material may be a lithium transition metal oxide containing one or more transition metals. For example, the cathode active material may be selected from the group consisting of LiCoO₂, LiNiO₂, LiMnO₂, Li₂MnO₃, LiMn₂O₄, Li(NiₐCo_{b}Mn_{c})O₂(0<a<1, 0<b<1, 0<c<1, a+b+c=1), LiNi_{1-y}Co_{y}O₂(O<y<1), LiCo_{1-y}Mn_{y}O₂, LiNi_{1-y}Mn_{y}O₂(O<y<1), Li(NiₐCo_{b}Mn_{c})O₄(0<a<2, 0<b<2, 0<c<2, a+b+c=2), LiMn_{2-z}Ni_{z}O₄(0<z<2), LiMn_{2-z}Co_{z}O₄(0<z<2), and combinations thereof.

A conductive material for the cathode may also be used without limitation as long as it may be used as a conductive material for the cathode of a conventional lithium-ion secondary battery. For example, the conductive material for the cathode may be a conventional material such as carbon nanotube (single-walled carbon nanotube, multi-walled carbon nanotube) or carbon black. In some aspect of the present disclosure the conductive material may be selected from the group consisting of graphite, carbon black, carbon fibers or metal fibers, metal powder, conductive whiskers, conductive metal oxide, activated carbon or polyphenylene derivatives. More specifically, the cathode conductive material may be at least one conductive material selected from the group consisting of natural graphite, artificial graphite, super-p^{™}, acetylene black, ketjen black^{™}, channel black, furnace black, lamp black, thermal black, denka black^{™}, aluminum powder, nickel powder, zinc oxide, potassium titanate and titanium oxide.

The binder for the cathode is mixed with the cathode active material and the conductive material for the cathode together to bind each component and thus to help the growth of the particles. The binder may be an organic binder, and the organic binder means a binder that is dissolved or dispersed in an organic solvent, particularly N-methylpyrrolidone (NMP), and is different from an aqueous binder that uses water as a solvent or dispersion medium. For example, the binder may be selected from the group consisting of poly(vinylidene fluoride) (PVDF), poly(vinylidene fluoride-co-hexafluoropropylene)(PVDF-co-HFP), polyvinyl alcohol, starch, hydroxypropyl cellulose, regenerated cellulose, polyvinyl pyrrolidone, polyimide, polyamideimide, polyethylene, polypropylene, ethylene-propylene-diene monomer (EPDM), sulfonated-EPDM, styrene-butadiene rubber, and fluororubber, but is not limited thereto. In addition, the weight ratio of the cathode active material, the conductive material for the cathode, and the binder included in the cathode also applies mutatis mutandis to the usual ones.

The current collector is not limited to a particular type and may include those having high conductivity without causing a chemical change in the corresponding battery, for example, stainless steel, copper, aluminum, nickel, titanium, sintered carbon, or aluminum or stainless steel treated with carbon, nickel, titanium and silver on the surface. The anode may comprise an anode active material layer comprising an anode active material usable in a conventional lithium ion secondary battery. The anode active material may be combined with a conductive material and/or a binder, as described herein in relation to the cathode active material layer. Additionally, the anode comprises a current collector if necessary, and the anode active material layer may be positioned on at least one surface of the current collector.

For example, the anode active material may comprise one or more selected from carbon such as non-graphitizable carbon and graphite-based carbon; metal composite oxides such as LiₓFe₂O₃(0≤x≤1), LiₓWO₂(0≤x≤1), SnₓMe₁₋ₓMe'_{y}O_{z}(Me: Mn,Fe,Pb,Ge; Me': Al, B, P, Si, elements of groups 1, 2, and 3 of the Periodic Table, halogen; 0<x≤1; 1≤y≤3; 1≤z≤8); lithium metal; lithium alloy; silicon-based alloy; tin-based alloy; metal oxide such as SnO, SnO₂, PbO, PbO₂, Pb₂O₃, Pb₃O₄, Sb₂O₃, Sb₂O₄, Sb₂O₅, GeO, GeO₂, Bi₂O₃, Bi₂O₄ and Bi₂O₅; an electrical conductivity polymer such as polyacetylene; Li-Co-Ni based material; titanium oxide; lithium titanium oxide; and the like.

In addition, the present disclosure provides a battery module including the all-solid-state battery as a unit cell, a battery pack including the battery module, and a device including the battery pack as a power source. Specific examples of the device include, but are not limited to, a power tool powered by electric motor; electric cars including an electric vehicle (EV), a hybrid electric vehicle (HEV), a plug-in hybrid electric vehicle (PHEV) and the like; an electric motorcycle including an electric bike (E-bike) and an electric scooter (E-scooter); an electric golf cart; and a power storage system.

Hereinafter, in order to assist in the understanding of the present disclosure, the preferred Example is presented, but it will be obvious to those skilled in the art that the Example is intended only to illustrate the present disclosure, and various modifications and alterations may be made within the scope and technical idea of the present disclosure, and also it is natural that such modifications and alterations fall within the scope of the appended claims.

### [Example 1] Preparation of surface-modified solid electrolyte

First, Li₆PS₅Cl (manufactured by NEI company) as a parent material, and perfluorothiol having a hydrophilic group (thiol group) and a hydrophobic group (fluorine-substituted hydrocarbon group) were prepared. The perfluorothiol compound was the same as illustrated in (b) of FIG. 1 (also known under CAS No: 34143-74-3 (1H,1H,2H,2H-perfluorodecanethiol). Each of these samples was processed in a glovebox with an oxygen level of less than 0.5 ppm. Subsequently, Li₆PS₅Cl and perfluorothiol were added to Thinky Mixer at a weight ratio of 5: 1, and then reacted at 25 °C for 20 minutes at 2,000 rpm to modify the surface of Li₆PS₅Cl. At this time, the hydrophilic group of perfluorothiol was chemically bonded with Li₆PS₅Cl, and the hydrophobic group of perfluorothiol was located at the outermost part of Li₆PS₅Cl in the external direction.

### [Comparative Example 1] Conventional solid electrolyte

A conventional solid electrolyte (Li₆PS₅Cl) without surface modification was prepared.

### [Comparative Example 2] Conventional solid electrolyte

The surface of Li₆PS₅Cl was simply coated with sulfosuccinic acid ester salt (anionic surfactant).

### [Experimental Example 1] Evaluation of structural stability of solid electrolyte

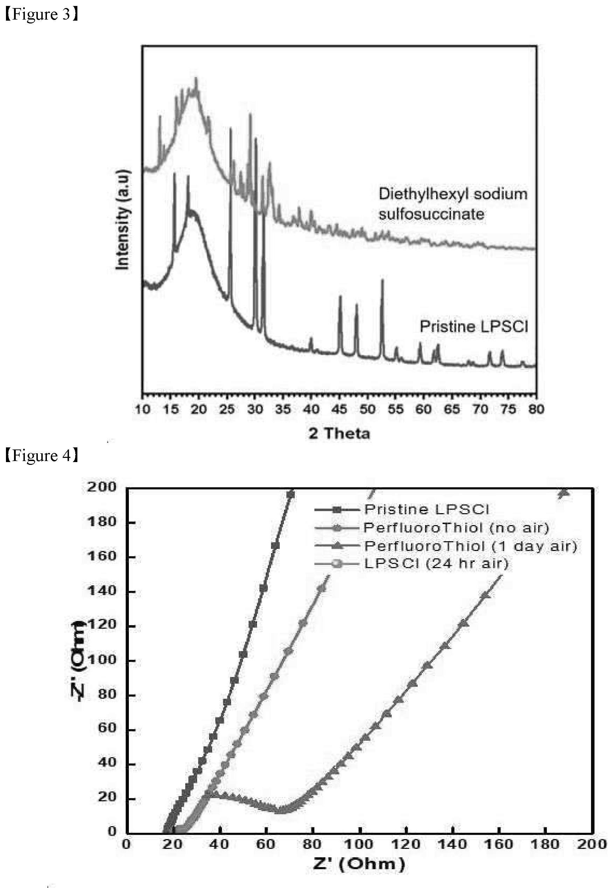

After exposing the solid electrolytes of Example 1 and Comparative Examples 1 and 2 to moisture at 25 °C and 25% relative humidity, structural stability of Li₆PS₅Cl was evaluated. FIG. 2 is an XRD graph showing the difference in structural stability between the solid electrolyte according to the present disclosure and a conventional solid electrolyte depending on the exposure to moisture (exposure to air), and FIG. 3 is an XRD graph showing the difference in structural stability of a conventional solid electrolyte depending on the exposure to moisture (exposure to air).

As shown in FIG. 2, it was confirmed that in the surface-modified solid electrolyte of Example 1 ('Perfluoro Thiol (no air)' and 'Perfluoro Thiol (1 day air)' in FIG. 2), the structure of Li₆PS₅Cl hardly changed even in an environment exposed to moisture. On the other hand, it was confirmed that the solid electrolytes (Li₆PS₅Cl, 'Pristine LPSCl' and 'Air exposed LPSCl (1 day air)') of Comparative Example 1, which were not surface-modified, had considerable structural changes. In addition, as shown in FIG. 3, it was confirmed that the solid electrolyte of Comparative Example 2 prepared by simply coating the surface of Li₆PS₅Cl with sulfosuccinic acid ester salt (diethylhexyl sodium sulfosuccinate) also had considerable structural changes. Through these, it may be seen that as in the present disclosure, when the surface of the parent material (sulfide-containing solid electrolyte) is modified with an amphiphilic compound, protection from moisture is possible.

### [Experimental Example 2] Evaluation of ionic conductivity of solid electrolyte

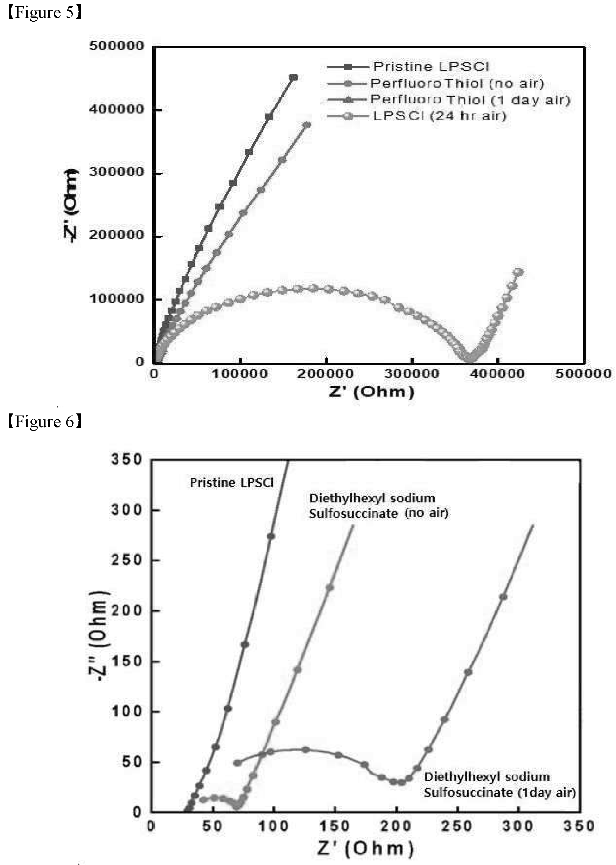

After exposing the solid electrolytes of Example 1 and Comparative Examples 1 and 2 to moisture at 25 °C and 25% relative humidity, the ionic conductivity of Li₆PS₅Cl was measured. FIGs. 4 and 5 are graphs showing the difference in ionic conductivity of the solid electrolyte according to the present disclosure and a conventional solid electrolyte depending on exposure to moisture (exposure to air), and FIG. 6 is a graph showing the difference in ionic conductivity of a conventional solid electrolyte depending on exposure to moisture (exposure to air).

As shown in FIGs. 4 and 5, it was confirmed that the surface-modified solid electrolyte of Example 1 ('Perfluoro Thiol (no air)' and 'Perfluoro Thiol (1 day air)' in FIGs. 4 and 5) maintained ionic conductivity up to about 1 mS/cm even after exposure to moisture. On the other hand, it was confirmed that the solid electrolytes (Li₆PS₅Cl, 'Pristine LPSCl' and 'LPSCl (24 hr. air)') of Comparative Example 1, which was not surface-modified, had ionic conductivity down to 0 mS/cm. In addition, As shown in FIG. 6, the solid electrolyte of Comparative Example 2 prepared by simply coating the surface of Li₆PS₅Cl with sulfosuccinic acid ester salt (diethylhexyl sodium sulfosuccinate) showed higher ionic conductivity than the solid electrolyte of Comparative Example 1, but lower ionic conductivity than the solid electrolyte of Example 1.

## Claims

1. A solid electrolyte for an all-solid-state battery comprising:
a solid electrolyte comprising a sulfide-containing solid electrolyte; and
a modified layer on a surface of the solid electrolyte, said modified layer comprising an amphiphilic compound, wherein the amphiphilic compound comprises at least one hydrophilic group and at least one hydrophobic group,
wherein the hydrophilic group of the amphiphilic compound is at least one selected from the group consisting of a thiol group, an amine group, an isocyanate group, and an ethoxysilyl group, and
wherein the hydrophobic group of the amphiphilic compound is a hydrocarbon group substituted with fluorine or an organosilicon compound.

2. The solid electrolyte for the all-solid-state battery according to claim 1, wherein the solid electrolyte comprises a bond between the hydrophilic group of the amphiphilic compound and the surface of the sulfide-containing solid electrolyte.

3. The solid electrolyte for the all-solid-state battery according to claim 1, wherein the amphiphilic compound is a perfluorothiol-containing compound.

4. The solid electrolyte for the all-solid-state battery according to claim 3, wherein the perfluorothiol-containing compound is a C1 to C30 aliphatic or aromatic hydrocarbon substituted with 1 to 20 fluorines and 1 to 5 thiol groups.

5. The solid electrolyte for the all-solid-state battery according to claim 4, wherein the perfluorothiol-containing compound is a C8-C12 hydrocarbon substituted with 15-20 fluorines and 1-3 thiol groups.

6. The solid electrolyte for the all-solid-state battery according to claim 4, wherein the perfluorothiol-containing compound is a C10 hydrocarbon substituted with 17 fluorines and 1 thiol group.

7. The solid electrolyte for the all-solid-state battery according to claim 4, wherein the perfluorothiol-containing compound is CF₃(CF₂)₇(CH₂)₂SH.

8. The solid electrolyte for the all-solid-state battery according to claim 1, wherein the sulfide-containing solid electrolyte comprises Li₆PS₅Cl.

9. The solid electrolyte for the all-solid-state battery according to claim 1, wherein a content of the amphiphilic compound is 5 to 30% by weight based on 100% by weight of the solid electrolyte for the all-solid-state battery.

10. The solid electrolyte for the all-solid-state battery according to claim 1, wherein a thickness of the modified layer comprising the amphiphilic compound is 0.1 *µ*m to 3 *µ*m.

11. The solid electrolyte for the all-solid-state battery according to claim 10, wherein the thickness of the modified layer comprising the amphiphilic compound is 0.1 *µ*m to 1 *µ*m.

12. The solid electrolyte for the all-solid-state battery according to claim 10, wherein the thickness of the modified layer comprising the amphiphilic compound is 0.3 *µ*m to 0.5 *µ*m.

13. The solid electrolyte for the all-solid-state battery according to claim 3, wherein the hydrophilic group of the perfluorothiol-containing compound is bonded with the solid electrolyte, and the hydrophobic group of perfluorothiol-containing compound is located at an outermost part of the solid electrolyte.

14. An all-solid-state battery comprising a cathode, an anode, and the solid electrolyte of claim 1.

15. The all-solid-state battery according to claim 14, wherein the solid electrolyte is positioned as a film having a layered structure between the cathode and the anode.

16. The all-solid-state battery according to claim 14, wherein the solid electrolyte is mixed and contained in one or both of a cathode active material and an anode active material.

17. The all-solid-state battery according to claim 14, wherein the all-solid-state battery is a semi-solid battery that further comprises a liquid electrolyte.

18. A battery module comprising an all-solid-state battery,
wherein the all-solid-state battery comprises a positive electrode, a negative electrode and a solid electrolyte membrane interposed between them,
wherein the solid electrolyte membrane comprises:
a solid electrolyte comprising a sulfide-containing solid electrolyte; and
a modified layer on a surface of the solid electrolyte, said modified layer comprising an amphiphilic compound, wherein the amphiphilic compound comprises at least one hydrophilic group and at least one hydrophobic group,
wherein the hydrophilic group of the amphiphilic compound is at least one selected from the group consisting of a thiol group, an amine group, an isocyanate group, and an ethoxysilyl group, and
wherein the hydrophobic group of the amphiphilic compound is a hydrocarbon group substituted with fluorine or an organosilicon compound.

19. An electric vehicle comprising a battery module comprising an all-solid-state battery,
wherein the all-solid-state battery comprises a positive electrode, a negative electrode and a solid electrolyte membrane interposed between them,
wherein the solid electrolyte membrane comprises:
a solid electrolyte comprising a sulfide-containing solid electrolyte; and
a modified layer on a surface of the solid electrolyte, said modified layer comprising an amphiphilic compound, wherein the amphiphilic compound comprises at least one hydrophilic group and at least one hydrophobic group,
wherein the hydrophilic group of the amphiphilic compound is at least one selected from the group consisting of a thiol group, an amine group, an isocyanate group, and an ethoxysilyl group, and
wherein the hydrophobic group of the amphiphilic compound is a hydrocarbon group substituted with fluorine or an organosilicon compound.

20. An electric vehicle according to claim 19, wherein the electric vehicle is selected from an electric vehicle (EV), a hybrid electric vehicle (HEV), a plug-in hybrid electric vehicle (PHEV), an electric two-wheeled vehicle or an electric golf cart.
